## Europäisches Patentamt

## European Patent Office

## Office européen des brevets

(19)

(11) Veröffentlichungsnummer: **0 203 908**
**B1**

(12) **EUROPÄISCHE PATENTSCHRIFT**

(45) Veröffentlichungstag der Patentschrift:
**28.12.88**

(21) Anmeldenummer: **86890080.4**

(22) Anmeldetag: **26.03.86**

(51) Int. Cl.⁴: **C 22 C 33/02, F 16 H 53/02 //
B22F7/06**

(54) Nocken zum Aufschrumpfen auf einer Nockenwelle und Verfahren zur Herstellung eines solchen Nockens durch Sintern.

(30) Priorität: **30.04.85 AT 1282/85**

(43) Veröffentlichungstag der Anmeldung:
**03.12.86 Patentblatt 86/49**

(45) Bekanntmachung des Hinweises auf die Patenterteilung:
**28.12.88 Patentblatt 88/52**

(84) Benannte Vertragsstaaten:
**BE CH DE FR GB IT LI NL SE**

(56) Entgegenhaltungen:
**WO-A-85/01520
FR-A- 2 292 543
GB-A- 2 116 589
US-A- 4 503 009**

(73) Patentinhaber: **Miba Sintermetall Aktiengesellschaft,
Hauptstrasse 3, A-4663 Laakirchen (AT)**

(72) Erfinder: **Drozda, Manfred, Dr., Linzerstrasse 44,
A-4810 Gmunden (AT)**

(74) Vertreter: **Hübscher, Gerhard, Dipl.-Ing., Patentanwälte
Dipl.-Ing. Gerhard Hübscher Dipl.-Ing. Helmut Hübscher
Dipl.-Ing. Heiner Hübscher Spittelwiese 7, A-4020 Linz
(AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Nocken zum Aufschrumpfen auf einer Nockenwelle sowie auf ein Verfahren zum Sintern eines solchen Nockens.

Können die Nocken einer Nockenwelle als gesonderte Bauteile ausgeführt und auf einer vorzugsweise als Rohr ausgebildeten Welle aufgeschrumpft werden, so ergeben sich sowohl hinsichtlich der Herstellung der Nockenwelle als auch hinsichtlich des Nockenwellengewichtes erhebliche Vorteile. Voraussetzung für eine solche Nockenwellenfertigung ist allerdings, dass die Nocken mit der notwendigen Genauigkeit aus einem den Belastungsanforderungen entsprechenden Werkstoff vergleichsweise einfach hergestellt werden können. Für die Herstellung von Nocken als gesonderte Bauteile bietet sich an sich ein Sinterverfahren an, jedoch ergeben sich beim Sintern von Nocken Schwierigkeiten, die Festigkeitsanforderungen mit den hohen Genauigkeitsanforderungen zu vereinen. Um die notwendige Werkstoffbeanspruchung zu gewährleisten, muss nämlich auf eine geringe Porosität des Sinterkörpers geachtet werden, wobei die eingesetzten Stahlveredler weitestgehend homogen verteilt sein müssen. Diese Anforderungen könnten durch ein Flüssigphasensintern erfüllt werden. Die flüssige Phase stellt eine hohe Diffusionsgeschwindigkeit und eine rasche Porenkoagulation sicher. Das damit erreichte Dichtsintern ist aber mit einem entsprechenden Schwund verbunden, was Probleme hinsichtlich der Masshaltigkeit der Sinterkörper aufwirft, so dass ein Flüssigphasensintern mit permanenter flüssiger Phase für die Herstellung von aufschrumpfbaren Nocken nicht geeignet ist. Dazu kommt noch, dass bekannte, hochbelastbare Sinterstähle, die beispielsweise 4,5 Gew.-% Nickel, 1,5 Gew.-% Kupfer, 0,5 Gew.-% Molybdän und 0,4 bis 0,7 Gew.-% Kohlenstoff enthalten, den Festigkeitsanforderungen bei Nocken und den Anforderungen hinsichtlich der Anlassfestigkeit nicht genügen können. Versuche haben gezeigt, dass Nocken aus solchen Sinterstählen bei den entsprechenden Lastwechseln eine Standzeit von weniger als 150 h aufweisen, was vollkommen unbefriedigend ist.

Der Erfindung liegt somit die Aufgabe zugrunde, unter Vermeidung dieser Mängel einerseits einen Sinterwerkstoff für aufschrumpfbare Nocken zu schaffen, der allen Anforderungen hinsichtlich der Festigkeit und der Temperaturbelastung genügt, und andererseits ein Verfahren zur einfachen Sinterung solcher Nocken anzugeben.

Die Erfindung löst die gestellte Aufgabe dadurch, dass der Nocken aus einem gesinterten, nickel- und kupferfreien Eisenpulvergemisch mit einem Gehalt von 0,3 bis 1,0 Gew.-% Kohlenstoff sowie 0,5 bis 3 Gew.-% Molybdän oder das Molybdän teilweise oder ganz im Verhältnis der Atomgewichte dieser Legierungselemente ersetzendem Wolfram besteht.

Durch diese besondere Zusammensetzung des Sinterwerkstoffes konnte in überraschender Weise eine ausserordentlich gute Härtbarkeit, eine gute Anlassfestigkeit, eine hervorragende Umlaufbiegefestigkeit und Schlagfestigkeit erreicht werden, wobei diese Legierung gegen Hertzsche Pressungen wesentlich widerstandsfähiger als vergleichbare chromlegierte Stähle oder carbonitrierte Sinterwerkstoffe ist. Anstelle des Molybdäns kann Wolfram treten, das gegenüber dem Molybdän gewisse Vorteile hinsichtlich der Anlassfestigkeit der Nocken mit sich bringt. Allerdings muss das Wolfram das Molybdän im Verhältnis der beiden Atomgewichte ersetzen, so dass gegenüber dem Molybdän etwa die doppelte Menge an Wolfram zugegeben werden muss.

Die Festigkeitseigenschaften hängen unter anderem von der erreichbaren, homogenen Molybdänverteilung ab. Um in einfacher Weise einen entsprechenden Sinterwerkstoff herstellen zu können, kann das nickel- und kupferfreie Eisenpulvergemisch, das 0,3 bis 1 Gew.-% Kohlenstoff und 0,5 bis 3 Gew.-% Molybdän oder das Molybdän teilweise oder ganz im Verhältnis der Atomgewichte dieser Legierungselemente ersetzendes Wolfram enthält, auf ein Raumgewicht von mindestens 7,2 g/cm$^3$ verdichtet und bei einer Temperatur gesintert werden, die oberhalb des eutektischen Punktes von Eisen und dem intermediär entstehenden Molybdäncarbid bzw. Wolframcarbid, aber unterhalb des Soliduspunktes des betreffenden ternären bzw. quaternären Systems im Gleichgewicht liegt.

Durch diese Sintertemperatur, die in den meisten Fällen zwischen 1230° und 1280°C liegen wird, wird erreicht, dass das bei allen Temperaturen intermediär entstehende Molybdäncarbid mit Eisen eine flüssige Phase bildet, die eine Voraussetzung für rasche Ausbildung einer homogenen Molybdänverteilung ist. Da die Sintertemperatur jedoch unterhalb des Soliduspunktes für das im Gleichgewicht befindliche ternäre bzw. quaternäre System, das durch γ-Eisen mit gelösten Kohlenstoff, Molybdän und/oder Wolfram gebildet wird, liegt, kann noch keine permanente flüssige Phase auftreten. Die flüssige Phase aus Eisen und Molybdäncarbid wird sehr rasch vom Gefüge in fester Lösung aufgenommen, wobei eine nahezu homogene Molybdänverteilung erreicht wird, so dass es keine Schwierigkeiten bereitet, die geforderte Masshaltigkeit sicherzustellen, und zwar bei einer vergleichsweise geringen Porosität. Da wegen des Fehlens einer permanent flüssigen Phase kaum ein Schwund auftritt, wird der Anteil der Porosität nur durch die beim Pulverpressen erreichte Dichte bestimmt, die zumindest 7,2 g/cm$^3$ betragen soll.

Besonders vorteilhafte Verhältnisse können gewährleistet werden, wenn das Eisenpulvergemisch 0,7 bis 0,9 Gew.-% Kohlenstoff und 1 bis 1,5 Gew.-% Molybdän oder das Molybdän teilweise oder ganz im Verhältnis der Atomgewichte dieser Legierungselemente ersetzendes Wolfram enthält. Mit einem solchen Sinterwerkstoff können vergütet Rockwellhärten HRC ≥ 40 und Dauerumlaufbiegefestigkeiten ≥ 400 MPa ohne weiteres gewährleistet werden, was erfindungsgemäss eine Voraussetzung für eine ausreichende Nockenfestigkeit ist. Die Vergütungsbedingungen werden so gewählt, dass durch das Erwärmen beim Aufschrumpfen der Nocken auf die Nockenwelle sowie im Betrieb der Nockenwelle keinerlei Härteabfall mehr zu befüchten ist.

*Beispiel 1*

Zur Herstellung von Nocken wurde von einem Metallpulvergemisch ausgegangen, das 1,5 Gew.-% Molybdän, 0,7 Gew.-% Graphit, 0,5 Gew.-% eines üblichen Presshilfsmittels, Rest Eisen enthielt. Dieses Pulvergemisch wurde mit einem Druck von 1000 MPa zu Formteilen mit einer Gründichte von 7,35 g/cm³ verdichtet. Die verdichteten Formteile wurden bei einer Sintertemperatur von 1250°C während einer Zeit von 1,5 h in einem Sinterofen gesintert.

Die auf Raumtemperatur abgekühlten Nocken wurden anschliessend während einer Zeit von 0,5 h auf einer Temperatur von 880°C gehalten und dann in Öl gehärtet, wobei eine Rockwellhärte HRC = 55 erzielt wurde. Zum Anlassen wurden die Nocken schliesslich auf 300°C erwärmt, wobei die Anlasszeit 0,5 h betrug. Die Rockwellhärte nach dem Anlassen wurde mit HRC = 40 gemessen.

*Beispiel 2*

Das Metallpulvergemisch nach dem 2. Beispiel entspricht im wesentlichen dem des Beispiels 1. Es wurde jedoch das Molybdän durch Wolfram ersetzt, und zwar im Verhältnis der Atomgewichte dieser Legierungselemente, so dass anstelle von 1,5 Gew.-% Molybdän 3 Gew.-% Wolfram im Metallpulvergemisch enthalten waren. Dieses Gemisch wurde wiederum mit einem Druck von 1000 MPa zu Formteilen vorverdichtet, wobei eine Gründichte von 7,40 g/cm³ erreicht wurde. Die Sinterung dieser Formteile wurde bei einer Sintertemperatur von 1260°C über eine Sinterdauer von 3 h durchgeführt. Nach einer Härtung in Öl (Erwärmungstemperatur 880°C, Haltezeit 0,5 h) konnte eine Rockwellhärte HRC = 58 gemessen werden. Die im Anschluss an einen Anlassvorgang bei 300°C (Anlasszeit 0,5 h) gemessene Härte betrug HRC = 47.

Die nach den Beispielen 1 und 2 gefertigten Nokken wurden nach einem Aufschrumpfen auf eine Welle in einem Nockenwellenprüfstand und im Motoreinsatz bis zu 1500 h erprobt, wobei hervorragende Verschleissbilder festgestellt werden konnten. Diese Prüfläufe entsprechen je nach Motorart und Prüfungsprogramm Lastwechseln zwischen 50 und 700 MPa bei Frequenzen von 6 bis 50 Hz.

**Patentansprüche**

1. Nocken zum Aufschrumpfen auf einer Nockenwelle, dadurch gekennzeichnet, dass er aus einem gesinterten, nickel- und kupferfreien Eisenpulvergemisch mit einem Gehalt von 0,3 bis 1,0 Gew.-% Kohlenstoff sowie 0,5 bis 3 Gew.-% Molybdän oder das Molybdän teilweise oder ganz im Verhältnis der Atomgewichte dieser Legierungselemente ersetzendem Wolfram besteht.

2. Verfahren zum Sintern von auf einer Nockenwelle aufschrumpfbaren Nocken nach Anspruch 1 unter Verwendung eines wenigstens 0,3 Gew.-% Kohlenstoff und gegebenenfalls mindestens 0,5 Gew.-% Molybdän enthaltenden Eisenpulvergemisches, das vor dem Sintern zu Formteilen verpresst wird, dadurch gekennzeichnet, dass das nickel- und kupferfreie Eisenpulvergemisch 0,3 bis 1,0 Gew.-% Kohlenstoff und 0,5 bis 3 Gew.-% Molybdän oder das Molybdän teilweise oder ganz im Verhältnis der Atomgewichte dieser Legierungselemente ersetzendes Wolfram enthält, auf ein Raumgewicht von mindestens 7,2 g/cm³ verdichtet und bei einer Temperatur gesintert wird, die oberhalb des eutektischen Punktes von Eisen und dem intermediär entstehenden Molybdäncarbid bzw. Wolframcarbid, aber unterhalb des Soliduspunktes des betreffenden ternären bzw. quaternären Systems im Gleichgewicht liegt.

3. Verfahren nach Anspruch 2, dadurch gekennzeichnet, dass das Eisenpulvergemisch 0,7 bis 0,9 Gew.-% Kohlenstoff und 1 bis 1,5 Gew.-% Molybdän oder das Molybdän teilweise oder ganz im Verhältnis der Atomgewichte dieser Legierungselemente ersetzendes Wolfram enthält.

**Claims**

1. A cam which is intended to be shrunk onto a camshaft, characterized in that the cam consists of a sintered iron powder mixture which is free of nickel or copper and contains 0.3 to 1.0 wt.-% carbon and 0.5 to 3 wt.-% molybdenum or tungsten which replaces the molybdenum entirely or in part in accordance with the atomic weights of said alloying elements.

2. A process of sintering cams in accordance with claim 1, which are adapted to be shrunk onto a camshaft, wherein an iron powder mixture is used which contains at least 0.3 wt.-% carbon and optionally contains at least 0.5 wt.-% molybdenum and which in compacted to form molded parts before it is sintered, characterized in that an iron powder mixture is used which is free of nickel and copper and contains 0.3 to 1.0 wt.-% carbon and 0.5 to 3 wt.-% molybdenum or tungsten which replaces the molybdenum entirely or in part in accordance with the atomic weights of said alloying elements, said iron powder is compacted to a specific gravity of at least 7.2 g/cm³ and is sintered at a temperature which is at an equilibrium at a temperature that is above the eutectic point of iron and the molybdenum cabide and/or tungsten carbide formed as an intermediate, but below the solidus point of the corresponding ternary or quaternary system.

3. A process according to claim 2, characterized in that the iron powder mixture contains 0.7 to 0.9 wt.-% carbon and 1 to 1.5 wt.-% molybdenum or tungsten which replaces the molybdenum entirely or in part in accordance with the atomic weights of said alloying elements.

**Revendications**

1. Came destinée à être montée par frettage sur un arbre à cames, caractérisée par le fait qu'elle est composée d'un mélange de poudres ferreuses fritté, exempt de nickel et de cuivre, possédant une teneur de 0,3 à 1,0% en poids de carbone, ainsi que de 0,5 à 3% en poids de molybdène, dans le rapport des poids atomiques de ces éléments d'alliage.

2. Procédé pour fritter des cames destinées à être montées par frettage sur un arbre à cames selon la revendication 1, en utilisant un mélange de poudres ferreuses contenant au moins 0,3% en poids de carbone et éventuellement au moins 0,5% en poids de molybdène, qui est comprimé pour former des pièces moulées avant le frittage, caractérisé par le fait que le mélange de poudres ferreuses, exempt de nickel et de cuivre, contient de 0,3% à 1,0% de carbone et de 0,5 à 3% en poids de molybdène ou de tungstène qui remplace partiellement ou totalement le molybdène, dans le rapport des poids atomiques de ces éléments d'alliage, est comprimé à un poids volumique d'au moins 7,2 g/cm$^3$ et est fritté à une température qui est supérieure au point eutectique de fer et de carbone de molybdène ou carbune de tungstène qui se produit en phase intermédiaire, mais est inférieur au point solidus du système ternaire ou quaternaire correspondant en équilibre.

3. Procédé selon la revendication 2, caractérisé par le fait que le mélange de poudres ferreuses contient de 0,7 à 0,9% en poids de carbone et de 1 à 1,5% de molybdène ou de tungstène qui remplace partiellement ou totalement le molybdène, dans le rapport des poids atomiques de ces éléments d'alliage.